(19) Europäisches Patentamt European Patent Office Office européen des brevets

(11) **EP 4 681 031 B1**

(12) **EUROPEAN PATENT SPECIFICATION**

(45) Date of publication and mention
of the grant of the patent:
**20.05.2026 Bulletin 2026/21**

(21) Application number: **24743850.0**

(22) Date of filing: **17.07.2024**

(51) International Patent Classification (IPC):
***G05B 19/406*** (2006.01)     ***B23K 26/062*** (2014.01)
***B23K 26/38*** (2014.01)

(52) Cooperative Patent Classification (CPC):
**G05B 19/406; B23K 26/062; B23K 26/38;**
**G05B 2219/34464**

(86) International application number:
**PCT/EP2024/070256**

(87) International publication number:
**WO 2025/017067 (23.01.2025 Gazette 2025/04)**

(54) **METHOD AND DEVICE FOR OPTIMIZING AN LOC WATCHDOG (LOSS OF CUT WATCHDOG) FOR A LASER CUTTING MACHINE**

VERFAHREN UND VORRICHTUNG ZUM OPTIMIEREN EINES LOC-WATCHDOGS ( LOSS OF CUT-WATCHDOG) FÜR EINE LASERSCHNEIDMASCHINE

PROCÉDÉ ET DISPOSITIF D'OPTIMISATION D'UN LOC-WATCHDOG (PERTE DE COUPE-WATCHOG) POUR UNE MACHINE DE DÉCOUPE AU LASER

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **19.07.2023 EP 23186327**

(43) Date of publication of application:
**21.01.2026 Bulletin 2026/04**

(73) Proprietor: **Bystronic Laser AG**
**3362 Niederönz (CH)**

(72) Inventor: **FAHRNI, Christoph**
**3363 Oberoenz (CH)**

(74) Representative: **Schwarz, Claudia**
**Schwarz + Kollegen**
**Patentanwälte**
**Heilmannstraße 19**
**81479 München (DE)**

(56) References cited:
**EP-B1- 3 412 399       DE-A1- 102020 209 000**
**US-A1- 2019 033 824**

**Description**

The present application relates to a method for optimizing an LOC watchdog for a laser cutting machine, a corresponding device, a system and a computer program.

The cutting of sheet metal using autonomous laser cutting machines necessitates a reliable and stable laser process. Due to various events, the laser process may be interrupted or not carried out as planned, meaning that individual parts cannot be separated from the rest of the sheet metal at all, or not completely. Delivery is delayed, reproducing the parts in question is time-consuming and additional costs are incurred. This is a situation that should be avoided, if possible. Losses of cut occur, among other circumstances, if the laser cutting sequence leads to a non-separating process due to melting/blow-out. There may be spontaneous reasons for a loss of cut, such as poor grid condition, contaminated sheet surfaces, changed material properties, laser wear, temperature, misaligned nozzle, worn nozzle and/or forced reasons, such as a reduced laser power, increased speed, incorrect nozzle.

From the prior art, it is known to design laser cutting machines with a cut control module in order to detect the loss of cut with a highly dynamic optical sensor that coaxially measures the emission of the process light. The current laser cutting head can be a fibre cutting head and has a very sensitive coaxial photodiode detector or other optical sensor for measuring the emission light of the laser process. In the prior art, the signals from the optical sensor(s) were processed by a loss of cut detector based on a threshold value comparison. For all systems (CO2, fibre; photodiode, camera), threshold values must be manually programmed/configured in advance according to the prior art. These values are used for comparison with the acquired sensor signal, which represents the process light.

In principle, the process logic from the prior art detects a loss of cut during cutting based on a predetermined threshold value being exceeded with a certain probability. This means that not every case of a loss of cut detected is an actual loss of cut. If the laser is switched off due to a (potentially merely supposed) loss of cut, re-cutting is carried out immediately afterwards. The re-cutting process starts at a fixed, predetermined position in relation to the breakage position, e.g. a few millimetres in front of the loss of cut event. The re-cutting process is furthermore carried out using fixed and safe process parameters (e.g. with a reduced feed rate). After the re-cutting phase, the normal cutting process is resumed.

Due to the very large variance of the different laser processes, it is difficult to develop a generic loss of cut detector that is designed and suitable for all different laser processes and that is based on threshold values. Therefore, the known methods have the disadvantage that false positive evaluations when detecting losses of cut have been possible in the past. This, in turn, means that the laser cutting process is interrupted, the cutting head is reset to a reset position for a supposedly detected loss of cut in the contour and re-cutting is carried out, even though no loss of cut had actually occurred. This increases the cutting time and impairs the performance of the cutting process.

Furthermore, the threshold values must be adjusted manually by cutting specialists in order to improve the sensitivity and precision of the detection. Even a cutting grid can force a higher emission signal, so that the distance between "normal" cutting and a loss of cut is quite small (for example a factor of 1.5). As the process also fluctuates, the intensity of the acquired signal is never continuous. Fluctuating nozzle distances also have a direct effect on the intensity of the signal from the sensors. If the threshold value is too high so that an LOC is not detected, the sheet is wasted and the protective glass or nozzle can be damaged by slag/sparks.

DE 10 2020 209 000 A1 discloses the determination of misdiagnoses for a tooling machine, which may be a cutting machine. The method detects the necessity to re-train a diagnostic model by means of applying a Taylor equation.

US 2019/0033824 A1 - although not in the field of laser processing - discloses to determine misdiagnoses and the determination of control limits and thresholds.

From EP 3 412 399 B1 it is known to determine the quality of a cut after interruption of the cutting process for adapting the cutting parameters for the remaining cutting process.

The object of the present invention is therefore to improve the previous system and method. In particular, the detection of a loss of cut in the form of not completely cut through workpieces is to be improved and, in particular, made more reliable and also further automated.

This object is achieved by the appended claims, in particular by a method, a device, a system and a computer program. Advantageous further developments are given in the dependent claims.

According to a first aspect, the invention relates to a method for optimizing an LOC watchdog for a laser cutting machine. The method can comprise the following method steps:

- Reading-in of first optical signals during a cutting process;
- Evaluating the read-in first optical signals with the LOC watchdog, which is designed to carry out a detection method in order to estimate a probability of whether a loss of cut, in particular in the form of incompletely cut workpieces, is occurring or has occurred in a cutting process and to provide this estimate as an intermediate result;
- If the LOC watchdog has estimated the occurrence of a loss of cut in the intermediate result as probable:

- Interrupting the cutting process and issuing a re-cutting command in order to carry out a re-cutting process;
- Reading-in of second optical signals during the re-cutting process;

  - Applying an analysis method to the read-in first and second optical signals in order to determine whether the intermediate result of the LOC watchdog is a true positive or false positive intermediate result;

- Optimizing the detection method of the LOC watchdog, depending on or in response to a result of the analysis method, wherein the analysis method is designed as a machine learning method and is designed to improve the detection method of the LOC watchdog and to retrain it

After optimizing the detection method, the optimized detection method can be applied or carried out on the laser cutting system. The detection method can thus be continuously improved or optimized. Alternatively or cumulatively, the detection method optimized in this way can be transferred to the laser cutting system for execution. Alternatively or in addition, the detection method optimized in this way can be used to control the laser cutting system and/or the laser cutting processes.

A loss of cut (LOC) comprises various undesirable cutting results. In particular, "incompletely cut workpieces" or an "incomplete cut" are considered as losses in the sense of a so-called "loss of cut". In particular, a loss of cut can be or be caused by a beam breakage. A loss of cut can have a variety of causes. A laser cutting process or laser cut is used here to completely cut through a workpiece. Depending on the cutting plan, different contours can be cut into or cut out of the workpiece. An incomplete cut refers to cases in which the workpiece has not been completely cut through so that, for example, a web or residual material remains in the cutting gap.

The workpiece can be flat (2-dimensional) or 3-dimensional (for example in the form of a hollow body, in particular a tube). The workpieces can be made of metal or an alloy, for example, or combinations thereof. The workpieces can be sheet metal parts or sheet metal tubes, for example.

The cutting process is used to cut through and in particular to completely cut through or cut the workpiece and is carried out in accordance with commands from a control system. The cutting process is carried out according to a cutting plan, which can, for example, specify certain contours on a metal sheet. After cutting a sheet metal plate, for example, the differently contoured, finished cut parts can be separated from the remaining metal sheet.

The re-cutting or re-cutting process is used to complete the cutting process when an LOC is detected. Re-cutting is always carried out approximately and, in particular, exactly on the same cutting contour as the previous cutting process. Cutting and re-cutting are thus preferably two processes carried out one after the other, preferably on the same trajectory. In particular, the cut can be made immediately in front of the breakage (or the position at which the breakage was detected) during re-cutting.

The laser cutting machine comprises a laser. The laser is a high-power laser, in particular for metal processing, which is operated in the power range of more than 1 kW and preferably in the range of 1 - 100 kW, in particular 4 - 40 kW. The laser cutting machine can preferably be part of a laser cutting system with a loading and unloading system, an automation system and/or an automatic sorting system.

The laser cutting system, in particular the laser cutting machine, can comprise an optical sensor arrangement. Preferably, the optical sensor arrangement is arranged on the laser, in particular on a cutting head of the laser. The optical sensor arrangement comprises at least one (optical) sensor. The sensor can be or comprise a camera, in particular a CMOS and/or a CCD camera. The optical sensor can be an in-process camera, for example. The optical sensor can alternatively or cumulatively be a 2D camera. Alternatively or in addition, the optical sensor can be a 3D camera, such as a stereo vision camera, light field camera, etc. Alternatively or cumulatively, the optical sensor arrangement can comprise at least one neuromorphic sensor (neuromorphic camera). The neuromorphic sensor is an event sensor that is designed to display the differences in light intensity acquired by the sensor over time. The neuromorphic sensor has a very high temporal resolution (in the microsecond range). The neuromorphic sensor can be designed as a retinomorphic sensor. Alternatively or cumulatively, the optical sensor can be or comprise at least one photodiode and particularly preferably a photodiode and preferably spatially resolved a 2D sensor, for example a CMOS camera. Alternatively or cumulatively, the optical sensor can be activated or deactivated as required. The optical sensor is used to acquire images. The optical sensor is used in particular to acquire the process light during cutting. Alternatively or cumulatively, the optical sensor can be part of an optical system consisting of optical (e.g. deflecting mirrors, lenses, optical filters, etc.) and optionally electronic components (semiconductors, circuit boards, etc.). The optical and/or electronic components are preferably also arranged in the cutting head. The optical components can comprise at least one optical sensor and/or one light source. The light source can optionally be activated when the optical sensor is activated in order to, in other words, acquire illuminated or non-illuminated images.

The re-cutting command (in particular as a component of control signals of the PLC (programmable logic controller)) is an electronic command for controlling/actuating the laser (on/off; as well as all necessary actuators and/or motors). The re-cutting command can comprise multiple command sections. In particular, it can comprise a specification of the position at which the re-cutting and/or lead-in should take place. The position specification is preferably calculated dynamically and can differ from re-cutting process to re-cutting process. The re-cutting command can comprise a re-cutting signal, in particular for activating the laser during re-cutting and/or optionally re-cutting parameters. The re-cutting parameters comprise laser power, feed rate, focal positions, focal diameter, frequency and pulse width for a pulsed laser, nozzle distance and cutting gas pressure. The re-cutting signal can therefore be binary and specify when the laser should be activated or deactivated on the trajectory.

The method can preferably be computer-implemented. The method is used to optimize and/or control an electronic module, namely the LOC watchdog. In other words, the LOC watchdog can be continuously improved. The improvement is calculated using a data-driven method and is used in particular to identify and eliminate false positive LOC estimates. The method can be used to ensure that a re-cutting process is only carried out in true positive cases.

The LOC watchdog is an electronic module. The LOC watchdog can be implemented by means of software and/or hardware. The LOC watchdog is designed to carry out a detection method and provide an intermediate result. The intermediate result indicates whether a loss of cut (LOC) is occurring or has occurred in the form of an incompletely cut through workpiece. The evaluation of the first optical signals with the LOC watchdog is preferably carried out by applying at least the detection method. Preferably, the detection method of the LOC watchdog is carried out continuously and/or during the cutting process. Alternatively or cumulatively, the detection method can also be carried out during the re-cutting process. The detection method can be designed as a machine learning method and/or comprise a second neural network.

Alternatively or cumulatively, the detection method can be designed as a comparison process implemented in software, which compares the acquired (first) optical signals, which in particular represent the intensity of the process radiation, with threshold values and outputs an LOC event (probability of an LOC exists) if a reference signal or reference range is exceeded or undershot.

Alternatively or cumulatively, the detection method can additionally calculate a reset position and/or an activation interval for activating the laser on the re-cutting process path. This makes it possible to activate and/or deactivate the laser in sections during the re-cutting process. The re-cutting can therefore be carried out proportionally on the re-cutting path. The technical effect is that the laser is only activated or switched on at the point where the probability of an LOC is high. This saves both energy and costs. The reset position can preferably be calculated depending on the position of the detected loss of cut or LOC event or the detected breakage position. Advantageously, the reset position can alternatively, or in addition, be calculated depending on an evaluation of the first and/or second optical signals and/or depending on other parameters of the cutting process, in particular the speed. This allows the reset position to be calculated or selected flexibly for the respective application and/or the cause of the loss of cut. The reset position does not necessarily have to coincide with the start of the re-cutting process.

The laser cutting system, and in particular the laser cutting machine, can comprise the LOC watchdog or exchange data with it, in particular if it is implemented on an external computing unit. The LOC watchdog provides an intermediate result that estimates a probability as to whether a loss of cut has occurred, is occurring or will occur. If the probability exceeds a predeterminable threshold value or if a predefinable event occurs or if predefinable conditions are met, the laser cutting process is stopped and a re-cutting command is triggered. The LOC watchdog thus influences or controls the cutting process, in particular by triggering re-cutting commands under certain circumstances or conditions, which are then loaded onto the laser processing machine, in particular the cutting head, for execution. If the LOC watchdog can now be improved or optimized - and in particular controlled - with the proposal of this application, the laser cutting process and thus the laser cutting system (and in particular the laser cutting machine) can also be indirectly controlled, for example by triggering re-cutting processes less frequently, namely only when the intermediate result proves to be a true positive. The re-cutting command can comprise re-cutting parameters that identify how the re-cutting process is to be carried out, such as feed rate, power, etc.

The analysis method is a method preferably implemented by means of software. The analysis method is designed to analyse the intermediate result provided by the LOC watchdog and, in particular, to analyse whether it is a false positive or true positive intermediate result. The analysis method can make this distinction (false positive or true positive) by carrying out a comparison between the first optical signals and the second optical signals. The comparison can, in particular, be an image comparison. The comparison can be carried out using classic comparison methods (pattern comparison, in particular image comparison for images). Alternatively or in addition, the analysis method can be configured as a machine learning method and/or comprise at least a first neural network.

The analysis method can be designed to improve the detection method of the LOC watchdog and in particular to retrain it. The analysis method comprises a data-driven method. The detection method can be improved or optimized on the basis of an issued optimization instruction, which - in particular if the detection method is designed as a neural network - can also be designed as a training instruction. The optimization of the detection method of the LOC watchdog, in particular the training, can be triggered in an event-based manner. The event can be configured in advance, e.g. time-based (at preconfigurable intervals) and/or when a new optimization instruction is issued or a combination of both or other criteria. The analysis method can thus be used to retrain the detection method of the LOC watchdog. In particular, the analysis method can be used to label the first optical signals of the detection method, in particular if this is implemented as a neural network. This can improve the accuracy and quality of the intermediate result provided by the LOC watchdog. After the LOC watchdog has been retrained, re-cutting is only carried out in true positive cases.

If the first and second optical signals are images, a comparison of a first image from the series of first images with the associated, in particular position-assigned, first image from the series of second images can be carried out. In general, the nth image of the first series is compared with the nth image of the second series.

If the compared images match or match up to a predefinable threshold value, the intermediate result in question is a false positive intermediate result. If the compared images do not match or differ beyond the predefinable threshold value, the intermediate result in question is a true positive intermediate result.

It is possible that no optimization instruction or an empty optimization instruction is generated and/or output if the analysis method has detected that the intermediate result is a true positive intermediate result. It is possible that the acquired data, comprising the first and/or second optical data and/or the reset position and/or the result of the LOC watchdog and/or the result of the analysis method, is only stored if the analysis method has determined that the intermediate result is a false positive result.

Preferably, the first and second optical signals are positionally correlated when applying the analysis method. The re-cutting process is carried out offset in time and in particular immediately after an LOC has been detected or after the cutting process has been stopped.

Alternatively or cumulatively, the re-cutting process can be carried out exactly on the same cutting path as the cutting process that was interrupted. This makes it possible to improve the quality of the cutting process.

Alternatively or cumulatively, the re-cutting process can be carried out in the same direction and/or in the opposite direction as the cutting process. The re-cutting process can be carried out when the laser cutting head is reset and/or when the contour is traced again (in the same direction as the cutting process).

Alternatively or cumulatively, the laser can be switched off during resetting, i.e. while travelling to the start of the re-cutting position, in particular if the re-cutting is carried out in the same direction. The re-cutting position is typically on the cutting path and in front of the breakage point (where the LOC was detected). If the re-cutting is carried out in the opposite direction, the laser can be switched off after finalizing the re-cutting process and when reversing the direction of movement on the cutting path (again in the direction of the cutting process).

Switching off the laser during sections of the re-cutting process (in particular during the outward travel or return travel to the re-cutting position, depending on the path on which the re-cutting process is to be carried out) advantageously leads to less susceptibility to damage in the machine base.

In particular, the laser can first be reset to the re-cutting position and then reactivated in the same direction for the re-cutting process. Alternatively or cumulatively, the laser can be activated for the re-cutting process as soon as it is reset to the re-cutting position.

The reset position indicates the position to which the cutting head is reset, in particular on a reset path, in order to retrace at least one section of a trajectory according to the cutting plan (re-cutting process). The reset path can correspond to the trajectory. The reset path can deviate from the cutting path (trajectory to be cut), in particular with large contours or very discontinuous paths (according to the cutting plan) or with long re-cutting processes. In particular, the reset path can be the direct path from the current cutting head position to the reset position.

The reset position for carrying out the re-cutting process can be adjusted dynamically and in response to the result of the detection method and/or the analysis method. In particular, the analysis method, which can comprise a neural network, can be designed in such a way that it not only outputs the "true positive/false positive" indication for one intermediate result of the LOC watchdog in each case, but also a start position for the re-cut (re-cutting position). Alternatively or cumulatively, further re-cutting parameters can be calculated.

Alternatively or cumulatively, the analysis method can be or comprise a first trained neural network. The analysis method, in particular the trained neural network, determines whether the intermediate result of the LOC watchdog is a true positive or false positive intermediate result.

Alternatively or cumulatively, the method can also comprise the following step: Labelling of the first optical signals with a label selected from the group consisting of: true positive and false positive.

Alternatively or cumulatively, the analysis method can be carried out as post-processing and in particular after the cutting process and/or after the re-cutting process. The analysis method can therefore be carried out off-line and temporally independent of the laser cutting process. The analysis method can be or comprise a first trained neural network that determines whether the intermediate result is a true positive or false positive intermediate result. The analysis method can thus be used to (re-)train the detection method.

Alternatively or cumulatively, the analysis method can be carried out on a different computing unit than the detection method.

Alternatively or cumulatively, the input data for the first neural network can comprise the first optical signals and the second optical signals. Alternatively or cumulatively, other process variables can also be used as input variables, such as a cut control signal and/or cutting parameters (feed rate, laser power, etc.).

The cut control signal comprises a signal for the intensity of the laser cutting process per time unit. The cut control signal makes it possible to assign the first and/or second optical signals to a point in time and/or to a point on the path of the contour to be cut (trajectory). Alternatively or cumulatively, the input data can comprise further - in particular time-correlated - signals in addition to the cut control signal, selected from the group consisting of:

- images from a camera,
- a cutting direction signal,
- a feed signal
- an intensity signal representing the intensity of the applied laser power, and
- the first and/or second optical signals, in pre-processed form.

Alternatively or cumulatively, the training data for the first neural network can comprise the first optical signals in labelled form and the second optical signals, wherein a detection label of the first optical signals in labelled form is a true positive label or a false positive label for at least the first optical signals.

In other words, the training data for the first neural network is labelled differently, namely with the detection label, than the training data for the second neural network (namely: analysis label).

Depending on the implementation of the first neural network, the second optical signals can be processed in an unlabelled form or in a labelled form.

Alternatively or cumulatively, the detection label can be generated automatically, in particular on the basis of an evaluation of the second optical signals and/or on the basis of the result of the analysis method.

Alternatively or cumulatively, the estimation of the probability of a possible loss of cut by the LOC watchdog can be carried out on-line and in particular during the cutting process. In particular, the detection method implemented on the LOC watchdog can be or comprise a second trained neural network.

Alternatively or cumulatively, the input data for the second neural network can comprise the first optical signals. Depending on the implementation of the second neural network, the input data can also comprise other variables, so that the second neural network processes multidimensional features in order to calculate the probability of a loss of cut (LOC) taking into account the other variables. The other variables can comprise cutting parameters (e.g. feed rate, laser power, material type, material thickness, etc.) and/or condition data for the cutting process. The condition data can comprise other signals acquired by sensors, such as cut control signals and/or nozzle distance or acoustic signals.

Alternatively or cumulatively, the training data for the second neural network can comprise the first optical signals in labelled form. The labelling is carried out with an analysis label and is applied to the first optical signals in order to obtain first optical signals in labelled form. The analysis label represents in particular the probability of a loss of cut.

Alternatively or cumulatively, the first optical signals can be subjected to pre-processing in a first pre-processing step before the detection method is applied and/or wherein the second optical signals are subjected to pre-processing in a second pre-processing step before the analysis method is applied. The pre-processing can comprise a normalization. The normalization is used to normalize certain cutting parameters, such as material thickness, speed/feed rate, nozzle diameter, nozzle distance, gas pressure, focal position, magnification and/or laser power, and thus make them comparable. In particular, the maximum value of the respective parameter can be set to 1. The pre-processing of the images can also include a gamma correction, in particular to brighten very dark image areas. Pre-processing can alternatively or cumulatively comprise various affine transformations, such as image rotation, normalizing the cutting direction for later image comparison, zooming, cropping and/or resizing, etc.

Alternatively or cumulatively, the first and/or the second optical signals, each in the original and/or in pre-processed form, the intermediate result of the LOC watchdog and/or the optimization instruction can be output on a user interface (HMI), wherein the user interface is provided on an electronic device which has a corresponding network connection. This can improve the transparency of the applied methods.

The electronic device can be provided on the edge device and/or on a server that is connected to the edge device via a web interface, for example, and/or on a mobile device and/or on the laser cutting machine, in each case with a corresponding network connection. The network connection can be a synchronous and preferably an asynchronous protocol (for example MQTT broker interface).

Alternatively or cumulatively, a memory decision module can be provided, which is designed to decide whether the intermediate result and/or the result of the analysis method and/or the optimization instruction are stored in a memory unit.

The achievement of the object has been described above in terms of the method. Features, advantages, or alternative embodiments mentioned in this way can also be applied to the other claimed subjects and vice versa. In other words, the present claims (which are directed, for example, to a device or a system) can also be further developed with the features described and/or claimed in connection with the method, and vice versa. The corresponding functional features of the method are thereby provided by corresponding modules, in particular by hardware modules or microprocessor modules, of the system or of the product, and vice versa. The preferred embodiments of the invention described above in connection with the method are not explicitly repeated for the device. In general, in computer science, a software implementation and a corresponding hardware implementation (e.g. as an embedded system) are equivalent. For example, a method step for "reading-in signals" can be carried out via a read-in interface. In order to avoid redundancy, the device is therefore not described again explicitly, although it can also be used in the alternative embodiments described in relation to the method. In principle, the claimed device is designed to carry out the claimed method.

The object is further achieved by a device according to the appended independent claim (device claim). According to one aspect, the device is designed to optimize an LOC watchdog, wherein the LOC watchdog can be used on or for a laser cutting machine. The device can be designed to carry out a method as described above. The device can be formed with:

- an interface to an optical sensor arrangement for reading-in first and second optical signals acquired by the optical sensor arrangement, wherein the optical sensor arrangement is provided on the laser cutting head;
- an LOC watchdog which is designed to carry out a detection method on the acquired and read-in first optical signals in order to estimate whether a loss of cut, in particular in the form of incompletely cut workpieces, is occurring or has occurred in a cutting process and to provide this as an intermediate result, and wherein the LOC watchdog is designed to interrupt the cutting process and to issue a re-cutting command for carrying out a re-cutting process if the LOC watchdog has estimated the occurrence of a loss of cut;

- a processor, wherein the processor is designed to carry out the following steps, in particular if the LOC watchdog has estimated the occurrence of a loss of cut:

  ▪ reading-in of second optical signals via the interface during the re-cutting process;
  ▪ applying an analysis method to the first and second optical signals in order to determine whether the intermediate result of the LOC watchdog is a true positive or false positive intermediate result;
  ▪ optimizing the detection method of the LOC watchdog in response to or depending on a result of the analysis method, wherein the analysis method is designed as a machine learning method and is designed to improve the detection method of the LOC watchdog and to retrain it.

The interface can be an analogue or digital interface. The interface is intended in particular for reading-in the first and second optical signals. An AD converter can be provided for signal/data conversion.

The device can optionally comprise a cloud interface, in particular to a cloud-based server. Preferably, the device can comprise a control interface to the laser cutting machine and/or comprise an internal or external control interface to a control system for the laser cutting machine.

The device and in particular the processor can be designed to output a control command for controlling the laser cutting machine and in particular for controlling the re-cutting process of the laser cutting machine and/or to make it available for execution on the laser cutting machine. The control command can be carried out on the laser cutting machine. The control relates in particular to the control of the reset position at the start of the re-cutting process, the control of the laser power and/or the control of other cutting parameters and/or the duration of the re-cutting process.

The object is also achieved by a system for controlling a laser cutting process having the following components:

- a device as described above,
- a laser cutting machine,
- a control system for the laser cutting machine and
- preferably, but optionally a cloud-based server with a memory and data communication interfaces between the respective components.

The cloud-based server can be understood as a process analysis device with a memory. In particular, the analysis method can be carried out on the cloud-based server. The (improved) model retrained using the analysis method can be transferred to the device and/or the control system of the laser cutting machine.

The analysis method can be implemented on the device and/or on the cloud-based server.

The control system can be implemented on the device or as a separate component and exchange data with all or some of the other components.

The object is also achieved by a computer program, wherein the computer program can be loaded into a memory unit of a computing unit and contains program code segments for causing the computing unit to carry out the method for controlling an LOC watchdog - as described above - when the computer program is executed in the computing unit.

The computing unit can be implemented in the device. The computing unit can also be implemented as a device. The computer program can also be implemented in a distributed manner as a distributed system and partially implemented on the laser cutting machine, the device and/or the cloud-based server. The computing unit can comprise or interact with a human machine interface (HMI), such that the HMI can be provided on a mobile electronic device (such as a mobile phone, smart device, etc.).

**Brief overview of the figures**

The features, characteristics and advantages of the present invention described above and the manner in which they are achieved will become clearer and more comprehensible in connection with the following description of the exemplary embodiments, which will be explained in more detail in connection with the figures. To this end, the figures show the following in a schematic representation:

Figure 1 shows a flow chart of the method according to an exemplary embodiment of the invention;

Figure 2 shows a schematic overview of a system according to the invention with the device for optimizing the watchdog;

Figure 3 shows a block diagram with a device according to a possible implementation;

Figure 4 shows a block diagram with a device according to another possible implementation;

Figure 5 shows a schematic representation of signal curves during the cutting process and re-cutting process in the case of true positive and false positive intermediate results;

Figure 6 shows an overview representation for acquiring the first and second optical signals during the cutting process and re-cutting process;

Figure 7 shows a schematic representation of the process light during the cutting process and re-cutting process;

Figure 8 shows a further representation for evaluating the acquired signals;

Figure 9 shows an overview of the interaction of the first and second neural networks; and

Figure 10 shows an overview of a possible implementation according to a preferred embodiment of the invention.

**Detailed description of the figures**

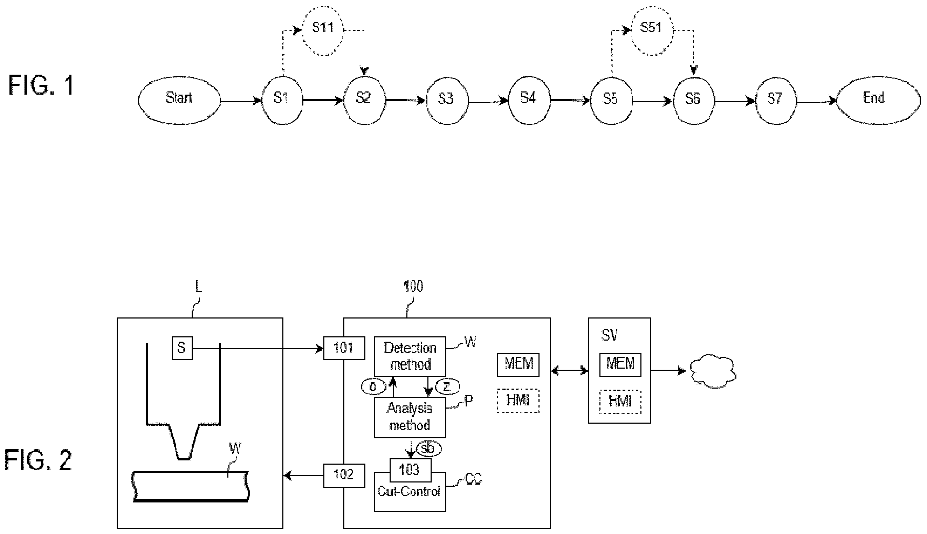

In the figures, elements with the same function are designated with the same reference signs, unless otherwise indicated.
The following exemplary embodiments, unless otherwise stated or already indicated, have at least one processor and/or memory unit in order to implement or carry out the method.
Also, in particular, a person skilled in the (relevant) art with knowledge of the method claim(s) is of course aware of all the usual possibilities for realizing products or possibilities for implementation that are considered common in the prior art, so that there is in particular no need for an independent disclosure as part of the description. In particular, these common realization variants known to the person skilled in the art can be realized exclusively by means of hardware (components) or exclusively by means of software (components). Alternatively and/or in addition, the person skilled in the art can, within the scope of his skill in the art, select as far as possible any combination of hardware (components) and software (components) according to the invention in order to implement realization variants according to the invention.
A combination of hardware (components) and software (components) according to the invention can occur in particular if one part of the effects according to the invention is preferably brought about exclusively by means of special hardware (e.g. a processor in the form of an ASIC or FPGA) and/or another part by the (processor- and/or memory-supported) software.
In particular, in view of the large number of different realization possibilities, it is impossible and also not expedient or necessary for the understanding of the invention to name all of these realization possibilities. In this respect, all of the following exemplary embodiments in particular are merely intended to show by way of example some of the ways in which such realizations of the teaching according to the invention could be implemented.
Consequently, the features of the individual exemplary embodiments in particular are not limited to the respective exemplary embodiment, but relate in particular to the invention in general. Accordingly, features of one exemplary embodiment can preferably also serve as features for another exemplary embodiment, in particular without this having to be explicitly mentioned in the respective exemplary embodiment.
In this regard, **Figure 1** shows a flow chart of the method according to the invention for optimizing an LOC watchdog W according to a preferred embodiment of the invention. After the start, the first optical signals are read-in during the cutting process in step S1. In an optional step S11, the read-in first optical signals can be subjected to pre-processing, in particular image processing, step S11, for example resizing, zooming, normalization, contrast change, brightness adjustment, etc. The LOC watchdog W then evaluates the read-in first optical signals in step S2. The LOC watchdog W provides an intermediate result z after the detection method has been applied. If the LOC watchdog W has estimated the occurrence of a loss of cut in the intermediate result z as probable, the cutting process is interrupted in step S3 and a re-cutting command to carry out a re-cutting process is issued in step S4. In step S5, second optical signals are read-in during the re-cutting process. Optionally, the read-in second optical signals can be subjected to an optional pre-processing. This is done in step S51. Since steps S11 and S51 are optional, they are indicated as a dashed line in Figure 1. In step S6, a further method, namely an analysis method, is applied to the first and second optical signals in order to determine whether the intermediate result provided by the LOC watchdog W is a true positive or false positive intermediate result. The method can then be terminated or carried out again.

**Figure 2** shows a schematic representation of the system according to the invention in an advantageous embodiment. The laser cutting machine L is shown schematically on the left-hand side in Figure 2 and comprises the cutting head, on which a sensor arrangement S is arranged. The sensor arrangement S is used to acquire optical signals. The sensor arrangement S can consist of a photodiode and, spatially resolved, a 2D sensor (for example a CMOS camera and/or neuromorphic camera). The acquired first and/or second optical signals represent the process light during the cutting process and/or the re-cutting process.

The device 100 is used to optimize the LOC watchdog W, which can preferably be implemented on the device 100, but need not be. The LOC watchdog W carries out a detection method. The detection method can be implemented by means of software, in particular as a second neural network. Furthermore, the device 100 comprises a processor P. The processor P is designed to carry out an analysis method. The analysis method can be implemented by means of software, in particular as a first neural network. The LOC watchdog W provides an intermediate result z after the detection method has been applied. The system also comprises a control unit, for example in the form of a cut control module CC, which can be designed as a programmable logic controller (PLC), for example. The cut control module CC can be implemented on the device 100. Cumulatively or alternatively, the cut control module CC can also be implemented on a separate computer instance which exchanges data with the device 100 and/or with the laser cutting machine L or is implemented on the laser cutting machine L.

After applying the analysis method to the processor P, control commands sb can be provided via an interface 103 to the cut control module CC for controlling the laser cutting system. The control commands sb can be transmitted, for example, via an interface 102 between the device 100 and the laser cutting machine L, to the laser cutting machine L for cutting and/or re-cutting the workpiece W.

After applying the analysis method to the processor P, an optimization of the detection method can be carried out in response to a result of the analysis method. If the detection method is provided by means of a second neural network, the optimization can comprise the output of optimization commands o. The optimization commands o are issued to the LOC watchdog W for retraining purposes. In particular, the optimization commands o can comprise a retraining data set or indicate how the weights of the second neural network need to be changed in order to satisfy the optimizations.

In an advantageous variant, the device 100 can comprise a memory decision module SEM, which is designed to decide whether data sets, in particular the first and/or second optical signals and/or the intermediate result z of the detection method and/or the result of the analysis method are transmitted to a central server SV. The server SV can be a cloud-based server that has corresponding memory structures MEM. Furthermore, a user interface HMI can be provided on the laser cutting machine L, on the device 100 and/or on the server SV. The user interface HMI can alternatively or cumulatively also be provided on the laser cutting machine L. As these are optional implementations, they are again indicated as a dashed line in Figure 2. The server SV can also be provided in the network of the laser cutting machine, i.e. be provided on premise. Alternatively, the server SV can be designed as a central computing instance via an external network connection (for example based on the http(s) protocol), for example for several production systems having laser cutting machines L.

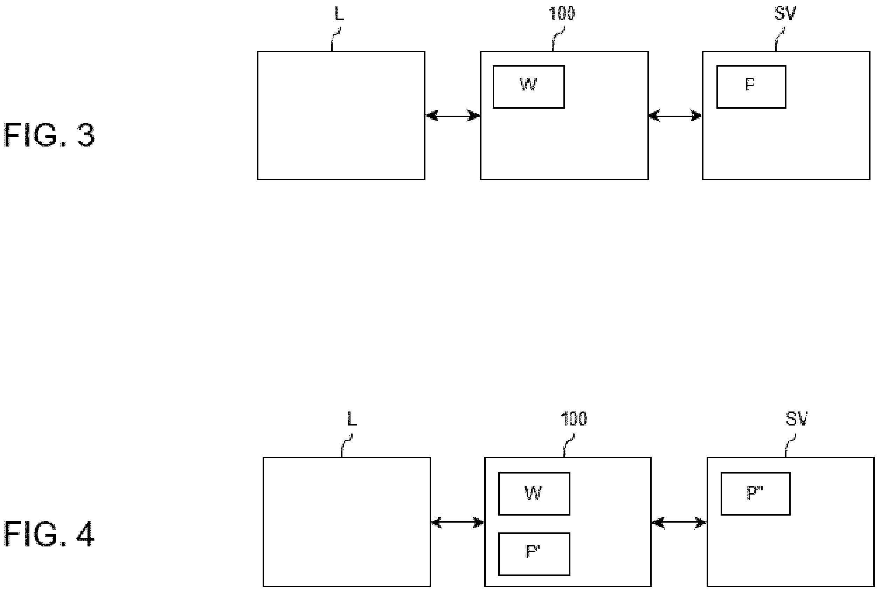

Figure 3 shows a schematic block diagram of the system according to the invention, in which the LOC watchdog W is provided on the device 100 and the processor P is provided on the server SV. The respective components, such as the laser cutting machine L, the device 100 and/or the server SV, exchange data via corresponding data lines (in a wired or wireless manner, for example via radio interfaces, WLAN or Internet).

In principle, the LOC watchdog W and the processor P can be implemented on the device 100.

As Figure 4 shows, it is alternatively possible that the processor P is designed as a distributed system, and a first part P' of the processor is implemented on the device 100 and a second part P" of the processor is implemented on the server SV.

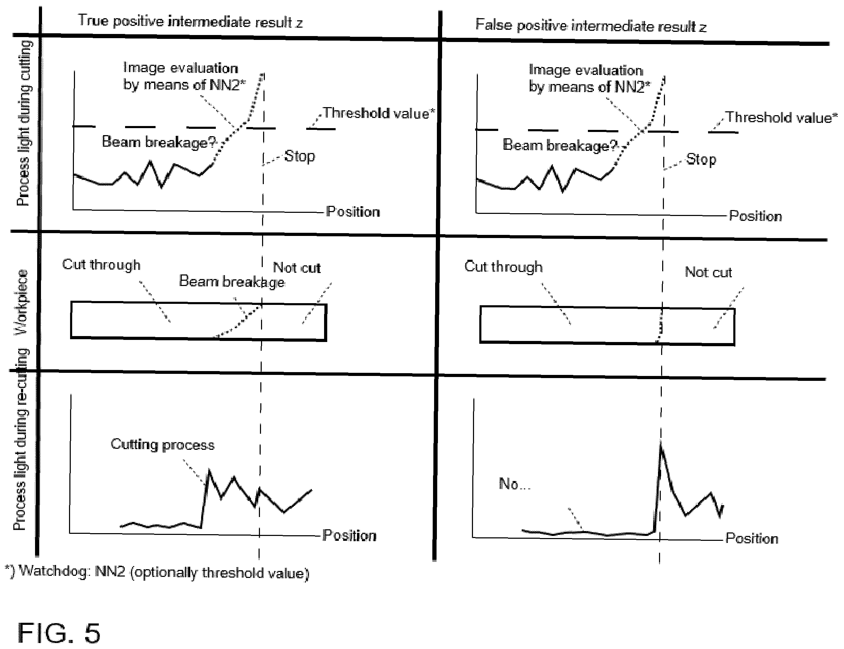

Figure 5 shows, in a simplified form, signal curves as results of the cutting and re-cutting process, in each case for a false positive and true positive evaluation (as the intermediate result z) by the detection method of the LOC watchdog W. A true positive evaluation is shown on the left-hand side, i.e. the detection method has correctly predicted a loss of cut in the form of an incompletely cut contour. In this case, a re-cutting process is carried out in the region of the LOC, which triggers process light that is visible or represented in the re-cutting process (bottom left in Figure 5). On the bottom right one can see that in the case of a false positive intermediate result, no more process light occurs during re-cutting, as the workpiece was already completely cut through. The upper representation in Figure 5 shows the process light during the cutting process (first optical signals) and the lower representation in Figure 5 shows the process light during re-cutting (re-cut, second optical signals). In the central representation in Figure 5, the workpiece is shown schematically. On the left-hand side of the workpiece representation, the workpiece is shown completely cut through, followed by the beam breakage and on the right-hand side, the workpiece is not yet completely cut through.

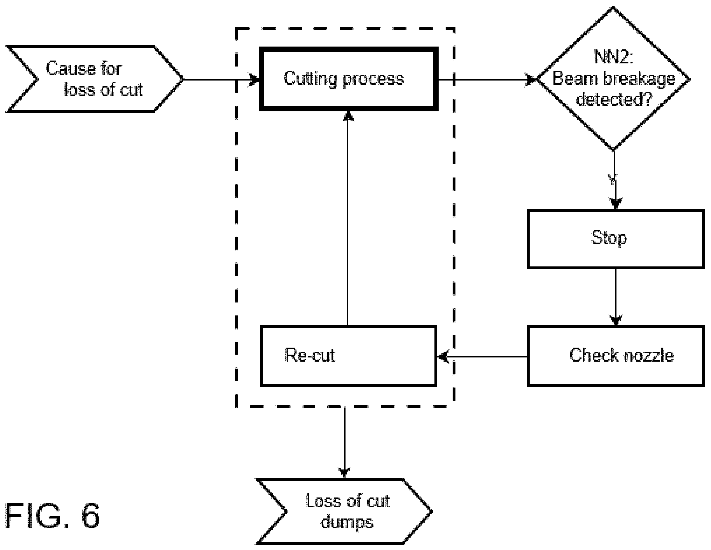

**Figure 6** shows that the first and second optical signals are stored from both the cutting process and the re-cutting process. In particular, the memory content (or dump) generated by a single loss of cut event can consist of optional metadata (parameters), optional sensor data (CutControl, axis data...) and necessarily the first and second optical signals, i.e. the camera images.

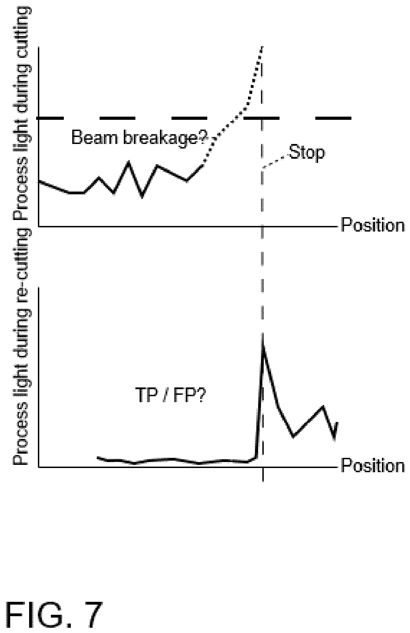

**Figure 7** shows the different signal curves. Digital LOC events, so-called dumps, are used to collect/archive different types of data in a single file (for example a .zip file). A control service creates various events in order to generate dump files. Dumps can contain data from more than one event (e.g. LOC and re-cut). The dumps are stored on a computing unit, in particular an intelligent control device, and sent to an edge node where they can be uploaded to a cloud (e.g. cloud-based server SV) for machine learning purposes. The device 100 can be designed as an edge node. If the LOC watchdog issues an alarm, the last data of the upcoming LOC cutting phase is of interest. The data collection therefore comprises the following content for a certain preconfigurable period of time:

- process light images captured by the camera in the form of first and second optical signals and optionally capture settings (e.g. exposure, gain);

- extracted features of the images (provided by machine learning and/or conventional vision, classic image processing);

- time series data such as cut control module signals (e.g. photodiode for measuring the process light), xyz trajectory of the machine, gas pressure value, nozzle distance (capacitive sensor), temperature values, focal position value...and/or

- optionally: cutting parameters (laser power, speed, nozzle, nozzle distance, gas (pressure/type), focal position, material thickness and type...)

- optionally: machine configuration (serial number and versions of the hardware/software units).

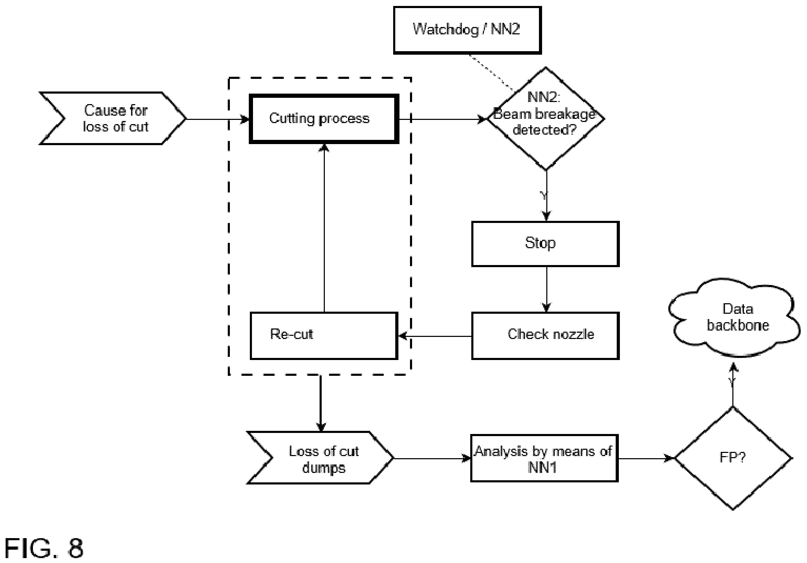

**Figure 8** shows an exemplary embodiment in which the analysis method is provided by means of a first neural network NN1 and the detection method is provided by means of a second neural network NN2. In the event of a false positive result of the analysis method, the relevant data (dumps) can be stored in a memory, in particular data backbone.

In principle, the first neural network, NN1, confirms the prediction of the second neural network, NN2, as true positive (TP) or detects a false positive (FP) result if the re-cut data does not confirm the breakage.

The second neural network, NN2, (implemented on the LOC watchdog W) continuously estimates the probability of a loss of cut or breakage based on the first optical signals (during the cutting process). If the probability is high (above a preconfigurable threshold), the laser/cutting is stopped and a re-cutting command is issued.

Preferably, a machine learning or neural network approach is used that can process multiple features (multi-feature approach). A neural network, in particular a Convolutional Neural Network or CNN (e.g. Resnet, MobileNet, ...), is usually very suitable for extracting features in order to classify images with and without a loss of cut, LOC. The features from the CNN filters are supplied to fully linked layers, where the classification takes place.

Based on time series that can be labelled by cutting experts (LOC present, not present), a neural network NN1 for automatic classification of true positives, TP, or false positives, FP, is introduced into the device 100, which can be designed as an edge device.

Based on the collected and labelled data (dumps), a second neural network, NN2, will predict the probability from camera images (if applicable, metadata and sensor values can also be passed to the network inputs).

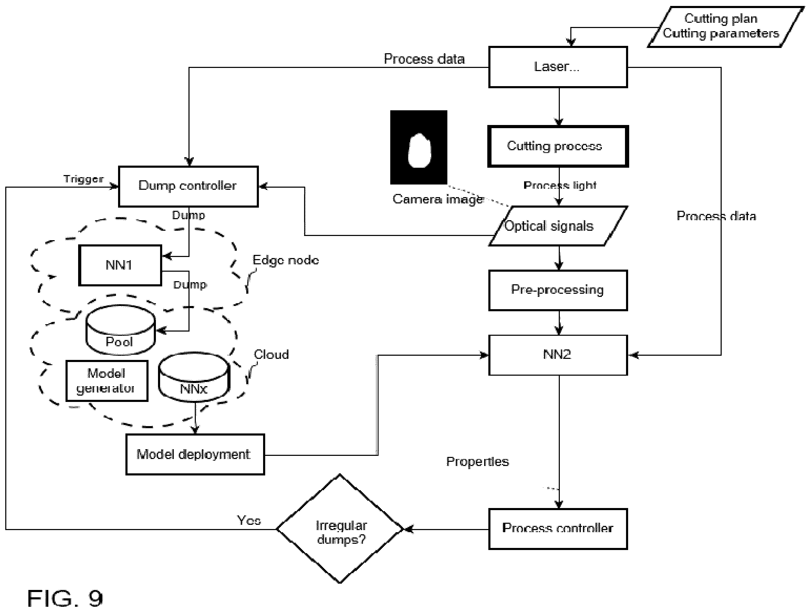

**Figure 9** shows that the first neural network, NN1, can be implemented in an edge node so that a memory content, dump, can be analysed and loaded asynchronously into the cloud (backbone). The edge is a loosely coupled environment that also runs on ByBrain, for example. The chosen approach for the loose coupling is an MQTT broker. As the edge node does not work in real time, modern programming languages such as Python can be used to carry out complex data analyses. The edge node, in particular the memory decision module SEM, decides whether dumps should be discarded or uploaded to a cloud (backbone, SV).

The second neural network, NN2, receives the, preferably pre-processed, first optical signals (images) and processes the data in real time.

If the sensitivity is too high, false positive results could disrupt production. In this case, "irregular dumps" are collected in the data backbone. The updated models can be used on the cutting machines after retraining by means of the optimization.

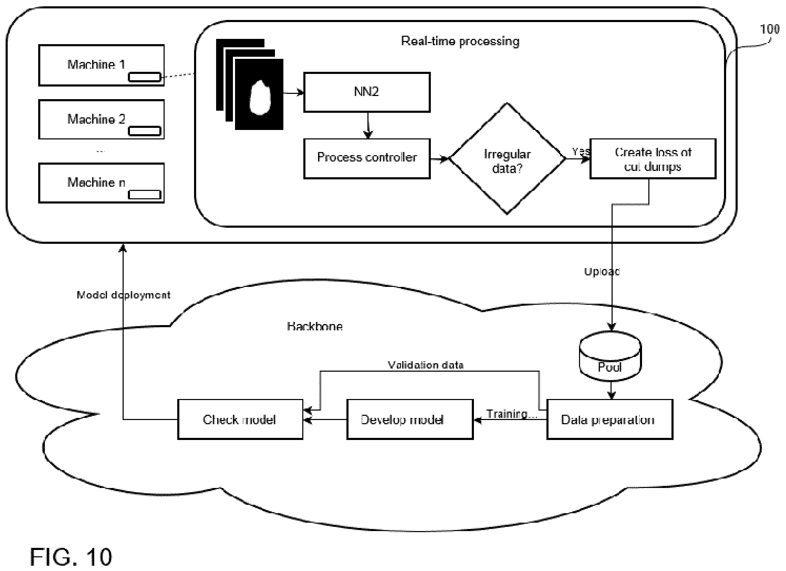

**Figure 10** shows a possible implementation of the cyber-physical laser cutting system.

The CutControl and position values are extracted from complete and saved documentations, dumps, with "regular cut / loc" and "re-cut". Predicting the "LOC probability" is not very difficult if both time series are handled together (fused). Preferably, a fused data set of first and second optical signals (location-correlated) is processed.

Preferably, the re-cut takes place on the same trajectory on which the LOC was detected during cutting.

After several "loss of cut dumps" have been collected, a neural network (in particular the first neural network, NN1) is trained to predict the probability of a loss of cut (event). The network is then used on a laser cutting machine L with an intelligent control system in order to predict the probability - in parallel with the CutControl sensor. The next step is to collect more data from field test customers and improve the sensitivity and precision. Next, CutControl is completely replaced by a multi-feature detection method (in particular a second neural network, NN2).

3 process phases can be implemented:

A, normal cutting process: 1s to 100ms before the LOC event - data is saved for labelling.

B, breakage phase: The last 100ms before the LOC event - the cutting signals form the first optical signals. Locally, B overlaps with the re-cut (second optical signals).

C, continuation of cutting process: Duration of 100ms from LOC position - only data from re-cut.

B: To be extracted from the dumps: Coordinates x, y and the CutControl (cc)

$$B_{cut} = [x, y, cc_{loc}], B_{re\text{-}cut} = [x, y, cc_{re\text{-}cut}].$$

In a pre-processing step, after 2D interpolation $B=[x, y, cc_{loc}, cc_{re\text{-}cut}]$.

The position is only used to merge loc and re-cut and can therefore be omitted:

$$B = [cc_{loc}, cc_{re\text{-}cut}].$$

C: Similarly for the non-overlapping re-cut: $C = [cc_{re\text{-}cut}]$

If the sampling rate for CutControl is 1kHz, the vectors have a length of 100. B has 2 locally synchronized vectors (first and second optical signals), while C consists only of second optical signals.

The classification of the first neural network is based on a trained label of the LOC probability (FP = 0, TP = 1). Before training, the label must be determined by a person who has experience in laser cutting.

The labels can be used together with the input data B and C to train a model, for example an LSTM.

| Input 1: B | Input 2: C |
|---|---|
| LSTM | LSTM |
| Dense(64) BatchNormalization() Activation() | Dense(64) BatchNormalization() Activation() |
| Dense(32) BatchNormalization() Activation() | Dense(32) BatchNormalization() Activation() |
| Dense(2) BatchNormalization() Activation() | Dense(2) BatchNormalization() Activation() |
| Flatten | Flatten |
| Dense(2) BatchNormalization() | |

(continued)

| Input 1: B | Input 2: C |
|---|---|
| Activation() | |
| Dense(1) | |
| Activation() | |
| Output: Probability loc | |

In order to improve robustness, CutControl can be replaced by other signals or additional information can be added.

Alternative embodiments are:

- The cutting direction can be added to B and C as a continuous sin/cos signal and/or

$$B = [\sin, \cos, cc_{loc}, cc_{re\text{-}cut}], \ C = [\sin, \cos, cc_{re\text{-}cut}].$$

- Normalized parameters can be added as Input 3:

P = [thickness, speed, nozzleDiameter, nozzleDistance, gasPressure, focalPosition, magnification, laserPower]

- CutControl can be replaced by the intensity or other features of the images.
- Pre-processed images could be provided directly as input. In this case, a convolutional neural network CNN could be used. The well-known technologies RNN, CNN+LSTM can be used for time series.

Due to the fluctuation in the laser process, a single image would never provide acceptable accuracy. Therefore, the chronology of the first and second optical signals must be taken into account.

The current approach from the prior art with the threshold value in CutControl may be simple - but it does have its limits. Nevertheless, it can be used to collect data - and propose a label that needs to be validated by cutting experts or by the first neural network, NN1.

Working with images and a neural network that extracts multiple features will improve accuracy. The second neural network NN2 could be structured as follows in a simplified manner:

| Input: img_1 | Input: img_2 | Input: img_n |
|---|---|---|
| Conv2D | Conv2D | Conv2D |
| Conv2D | Conv2D | Conv2D |
| Flatten | Flatten | Flatten |
| LSTM | | |
| Dense | | |
| Dense | | |
| Activation | | |
| **Output: Probability loc** | | |

The images [1, 2, ..., n] are processed one after the other - after pre-processing. Conv2D extracts features from an image, but a deep model such as MobileNet can also be used instead.

After flattening, the vectors are forwarded to the Long Short Time Memory LSTM. LSTM is a layer that can process multiple chronological inputs in order to find the essence.

The information from the LSTM must be filtered using fully linked dense layers in order to obtain the prediction of the probability.

The second neural network NN2 monitors the cutting process as the LOC watchdog. In the event of a beam breakage, an immediate stop must be made within a few milliseconds in order to minimize the negative consequences for the workpiece and wearing parts on the machine (the nozzle, for example). In the technical implementation, it must therefore preferably be possible to process 300 images per second in real time, which on the one hand requires an 'NN2 optimized for throughput' and on the other hand requires high-performance processing power (CPU/GPU).

**Claims**

1. A method for optimizing an LOC watchdog (W) for a laser cutting machine (L), wherein the method comprises the following method steps:

   - Reading-in (S1) of first optical signals during a cutting process;
   - Evaluating (S2) the first optical signals with the LOC watchdog (W), which is designed to carry out a detection method in order to estimate a probability of whether a loss of cut, in particular in the form of incompletely cut workpieces, is occurring or has occurred in a cutting process and to provide this estimate as an intermediate result (z); **characterized in that**
   - If the LOC watchdog (W) has estimated the occurrence of a loss of cut in the intermediate result (z) as probable:

      - Interrupting (S3) the cutting process and issuing (S4) a re-cutting command in order to carry out a re-cutting process;
      - Reading-in (S5) of second optical signals during the re-cutting process;
      - Applying (S6) an analysis method to the first and second optical signals in order to determine whether the intermediate result (z) of the LOC watchdog (W) is a true positive or false positive intermediate result
      - Optimizing (S7) the detection method of the LOC watchdog (W) in response to a result of the analysis method, wherein the analysis method is designed as a machine learning method and is designed to improve the detection method of the LOC watchdog and to retrain it

2. The method according to claim 1, wherein the re-cutting process is carried out exactly on the same cutting path as the cutting process that was interrupted.

3. The method according to any one of the preceding claims, wherein the method comprises the following step:

   - Labelling of the first optical signals with a label selected from the group consisting of: true positive and false positive.

4. The method according to any one of the preceding claims, wherein the re-cutting process is carried out in the same direction or in the opposite direction as the cutting process.

5. The method according to any one of the preceding claims, wherein the analysis method is carried out as post-processing and in particular after the cutting process and after the re-cutting process and/or is or comprises a first trained neural network (NN1) which determines whether the intermediate result (z) is a true positive or false positive intermediate result.

6. The method according to the immediately preceding claim, wherein input data for the first neural network (NN1) comprises the first optical signals and the second optical signals.

7. The method according to any one of claims 5 or 6, wherein training data for the first neural network (NN1) comprises the first optical signals in labelled form and the second optical signals, wherein a detection label of the first optical signals in labelled form is a true positive label or a false positive label for at least the first optical signals.

8. The method according to claim 7, wherein the detection label is generated automatically, in particular on the basis of an evaluation of the second optical signals and/or on the basis of the result of the analysis method.

9. The method according to any one of the preceding claims, wherein the estimation of the probability of a possible loss of cut by the LOC watchdog is carried out on-line and in particular during the cutting process and/or comprises or is a second trained neural network (NN2).

10. The method according to the immediately preceding claim, wherein the input data for the second neural network (NN2) comprises the first optical signals.

11. The method according to any one of claims 9 or 10, wherein the training data for the second neural network (NN2) comprises the first optical signals in labelled form, wherein an analysis label of the first optical signals in labelled form is a probability of a loss of cut.

12. The method according to any one of the preceding claims, wherein the detection method of the LOC watchdog (W) is additionally designed to calculate a reset position on the basis of the evaluation of the first optical signals.

13. A device (100) for optimizing an LOC watchdog (W) for a laser cutting machine (L), wherein the device (100) is designed to carry out a method according to any one of the preceding method claims, having:

- An interface (101) to an optical sensor arrangement (S) for reading-in first and second optical signals acquired by the optical sensor arrangement (S), wherein the optical sensor arrangement (S) is provided on the laser cutting head;
- An LOC watchdog (W) which is designed to carry out a detection method on the acquired and read-in first optical signals in order to estimate whether a loss of cut, in particular in the form of incompletely cut workpieces, is occurring or has occurred in a cutting process and to provide this as an intermediate result (z), **characterized in that** the LOC watchdog (W) is designed to interrupt the cutting process and to issue a re-cutting command for carrying out a re-cutting process if the LOC watchdog (W) has estimated the occurrence of a loss of cut;
- A processor (P), wherein the processor (P) is designed to carry out the following steps if the LOC watchdog (W) has estimated the occurrence of a loss of cut:

   ▪ Reading-in of second optical signals via the interface (101) during the re-cutting process;
   ▪ Applying an analysis method to the first and second optical signals in order to determine whether the intermediate result (z) of the LOC watchdog (W) is a true positive or false positive intermediate result;
   ▪ Optimizing the detection method of the LOC watchdog (W) in response to a result of the analysis method, wherein the analysis method is designed as a machine learning method and is designed to improve the detection method of the LOC watchdog and to retrain it.

14. A system for controlling a laser cutting process having the following components:

- a device (100) according to claim 13,
- a laser cutting machine (L),
- a control system for the laser cutting machine (L) and
- optionally a cloud-based server (SV) with a memory (MEM) and data communication interfaces between the respective components.

15. A computer program, wherein the computer program can be loaded into a memory unit of a computing unit and contains program code segments for causing the computing unit to carry out the method for controlling an LOC watchdog (W) according to any one of the preceding method claims when the computer program is executed in the computing unit.

**Patentansprüche**

1. Verfahren zum Optimieren eines LOC-Watchdogs (W) für eine Laserschneidmaschine (L), wobei das Verfahren die folgenden Verfahrensschritte umfasst:

- Einlesen (S1) erster optischer Signale während eines Schneidvorgangs;
- Bewerten (S2) der ersten optischen Signale mit dem LOC-Watchdog (W), der dazu ausgelegt ist, ein Erkennungsverfahren durchzuführen, um eine Wahrscheinlichkeit dafür abzuschätzen, ob ein Schnittverlust, insbesondere in Form von unvollständig geschnittenen Werkstücken, in einem Schneidprozess auftritt oder aufgetreten ist, und diese Abschätzung als Zwischenergebnis (z) bereitzustellen; **dadurch gekennzeichnet, dass**
- wenn der LOC-Watchdog (W) das Auftreten eines Schnittverlusts im Zwischenergebnis (z) als wahrscheinlich abgeschätzt hat:

   - Unterbrechen (S3) des Schneidvorgangs und Ausgeben (S4) eines Nachschneidbefehls, um einen Nachschneidvorgang durchzuführen;
   - Einlesen (S5) zweiter optischer Signale während des Nachschneidvorgangs;

- Anwenden (S6) eines Analyseverfahrens auf die ersten und zweiten optischen Signale, um zu bestimmen, ob das Zwischenergebnis (z) des LOC-Watchdogs (W) ein echtes positives oder ein falsches positives Zwischenergebnis ist;
- Optimieren (S7) des Erkennungsverfahrens des LOC-Watchdogs (W) als Reaktion auf ein Ergebnis des Analyseverfahrens, wobei das Analyseverfahren als maschinelles Lernverfahren ausgelegt ist und dazu dient, das Erkennungsverfahren des LOC-Watchdogs zu verbessern und neu zu trainieren.

2. Verfahren nach Anspruch 1, wobei der Nachschneidevorgang genau auf dem gleichen Schneidepfad wie der unterbrochene Schneidevorgang durchgeführt wird.

3. Verfahren nach einem der vorstehenden Ansprüche, wobei das Verfahren den folgenden Schritt umfasst:

- Kennzeichnen der ersten optischen Signale mit einer Kennzeichnung, das aus der Gruppe ausgewählt ist, die aus: echt positiv und falsch positiv besteht.

4. Verfahren nach einem der vorstehenden Ansprüche, wobei der Nachschneidevorgang in derselben Richtung oder in der entgegengesetzten Richtung wie der Schneidevorgang durchgeführt wird.

5. Verfahren nach einem der vorstehenden Ansprüche, wobei das Analyseverfahren als Nachbearbeitung und insbesondere nach dem Schneidevorgang und nach dem Nachschneidevorgang durchgeführt wird und/oder ein erstes trainiertes neuronales Netzwerk (NN1) ist oder umfasst, das bestimmt, ob das Zwischenergebnis (z) ein echtes positives oder ein falsches positives Zwischenergebnis ist.

6. Verfahren nach dem unmittelbar vorstehenden Anspruch, wobei die Eingangsdaten für das erste neuronale Netzwerk (NN1) die ersten optischen Signale und die zweiten optischen Signale umfassen.

7. Verfahren nach einem der Ansprüche 5 oder 6, wobei Trainingsdaten für das erste neuronale Netzwerk (NN1) die ersten optischen Signale in gekennzeichneter Form und die zweiten optischen Signale umfassen, wobei eine Kennzeichnung der ersten optischen Signale in gekennzeichneter Form eine echte positive Kennzeichnung oder eine falsche positive Kennzeichnung für mindestens die ersten optischen Signale ist.

8. Verfahren nach Anspruch 7, wobei die Kennzeichnung automatisch erzeugt wird, insbesondere auf der Grundlage einer Einschätzung der zweiten optischen Signale und/oder auf der Grundlage des Ergebnisses des Analyseverfahrens.

9. Verfahren nach einem der vorstehenden Ansprüche, wobei die Schätzung der Wahrscheinlichkeit eines möglichen Schnittverlusts durch den LOC-Watchdog online und insbesondere während des Schneidvorgangs durchgeführt wird und/oder ein zweites trainiertes neuronales Netzwerk (NN2) umfasst oder ist.

10. Verfahren nach dem unmittelbar vorstehenden Anspruch, wobei die Eingangsdaten für das zweite neuronale Netzwerk (NN2) die ersten optischen Signale umfassen.

11. Verfahren nach einem der Ansprüche 9 oder 10, wobei die Trainingsdaten für das zweite neuronale Netzwerk (NN2) die ersten optischen Signale in gekennzeichneter Form umfassen, wobei eine Analyse-Kennzeichnung der ersten optischen Signale in gekennzeichneter Form eine Wahrscheinlichkeit eines Schnittverlusts ist.

12. Verfahren nach einem der vorstehenden Ansprüche, wobei das Erkennungsverfahren des LOC-Watchdogs (W) zusätzlich dazu ausgelegt ist, auf der Grundlage der Einschätzung der ersten optischen Signale eine Rücksetzposition zu berechnen.

13. Vorrichtung (100) zum Optimieren eines LOC-Watchdogs (W) für eine Laserschneidmaschine (L), wobei die Vorrichtung (100) dazu ausgelegt ist, ein Verfahren gemäß einem der vorstehenden Verfahrensansprüche durchzuführen, mit:

- einer Schnittstelle (101) zu einer optischen Sensoranordnung (S) zum Einlesen erster und zweiter optischer Signale, die von der optischen Sensoranordnung (S) erfasst werden, wobei die optische Sensoranordnung (S) am Laserschneidkopf bereitgestellt ist;
- einem LOC-Watchdog (W), der dazu ausgelegt ist, ein Erkennungsverfahren an den erfassten und eingelesenen ersten optischen Signalen durchzuführen, um zu schätzen, ob in einem Schneidprozess ein Schnittverlust, insbesondere in Form von unvollständig geschnittenen Werkstücken, auftritt oder aufgetreten ist, und dies als Zwischenergebnis (z) bereitzustellen, **dadurch gekennzeichnet, dass** der LOC-Watchdog (W) dazu ausgelegt ist, den Schneidprozess zu unterbrechen und einen Nachschneidbefehl zur Durchführung eines Nachschneidprozesses auszugeben, wenn der LOC-Watchdog (W) das Auftreten eines Schnittverlusts abgeschätzt hat;

- einem Prozessor (P), wobei der Prozessor (P) dazu ausgelegt ist, die folgenden Schritte durchzuführen, wenn der LOC-Watchdog (W) das Auftreten eines Schnittverlusts abgeschätzt hat:

  ■ Einlesen zweiter optischer Signale über die Schnittstelle (101) während des Nachschneidevorgangs;
  ■ Anwenden eines Analyseverfahrens auf die ersten und zweiten optischen Signale, um zu bestimmen, ob das Zwischenergebnis (z) des LOC-Watchdogs (W) ein echtes positives oder ein falsches positives Zwischenergebnis ist;
  ■ Optimieren des Erkennungsverfahrens des LOC-Watchdogs (W) als Reaktion auf ein Ergebnis des Analyseverfahrens, wobei das Analyseverfahren als maschinelles Lernverfahren ausgelegt ist und dazu dient, das Erkennungsverfahren des LOC-Watchdogs zu verbessern und neu zu trainieren.

14. System zum Steuern eines Laserschneidprozesses, das die folgenden Komponenten aufweist:

    - eine Vorrichtung (100) nach Anspruch 13,
    - eine Laserschneidmaschine (L),
    - ein Steuersystem für die Laserschneidmaschine (L) und
    - optional einen cloudbasierten Server (SV) mit einem Speicher (MEM) und Datenkommunikationsschnittstellen zwischen den jeweiligen Komponenten.

15. Computerprogramm, wobei das Computerprogramm in eine Speichereinheit einer Recheneinheit geladen werden kann und Programmcodesegmente enthält, die die Recheneinheit veranlassen, das Verfahren zur Steuerung eines LOC-Watchdogs (W) nach einem der vorstehenden Verfahrensansprüche durchzuführen, wenn das Computerprogramm in der Recheneinheit ausgeführt wird.

## Revendications

1. Procédé d'optimisation d'un mécanisme de surveillance de LOC (W) pour une machine de découpe au laser (L), le procédé comprenant les étapes de procédé suivantes :

   - la lecture (S1) de premiers signaux optiques pendant un processus de découpe ;
   - l'évaluation (S2) des premiers signaux optiques avec le mécanisme de surveillance de LOC (W), conçu pour mettre en œuvre un procédé de détection afin d'estimer la probabilité qu'une perte de découpe, notamment sous forme de pièces incomplètement découpées, se produise ou se soit produite lors d'un processus de découpe, et de fournir cette estimation comme résultat intermédiaire (z) ; **caractérisé en ce que**
   - si le mécanisme de surveillance de LOC (W) a estimé que la survenue d'une perte de découpe dans le résultat intermédiaire (z) était probable :

     - l'interruption (S3) du processus de découpe et l'émission (S4) d'une instruction de nouvelle découpe afin d'effectuer un processus de nouvelle découpe ;
     - la lecture (S5) de seconds signaux optiques pendant le processus de nouvelle découpe ;
     - l'application (S6) d'un procédé d'analyse aux premier et second signaux optiques afin de déterminer si le résultat intermédiaire (z) du mécanisme de surveillance de LOC (W) est un résultat intermédiaire vrai positif ou faux positif ;
     - l'optimisation (S7) du procédé de détection du mécanisme de surveillance de LOC (W) en réponse à un résultat du procédé d'analyse, dans lequel le procédé d'analyse est conçu en tant que procédé d'apprentissage automatique et est conçu pour améliorer le procédé de détection du mécanisme de surveillance de LOC et le réentraîner.

2. Procédé selon la revendication 1, dans lequel le processus de nouvelle découpe est effectué exactement sur le même chemin de découpe que le processus de découpe qui a été interrompu.

**3.** Procédé selon l'une quelconque des revendications précédentes, dans lequel le procédé comprend l'étape suivante :

- l'étiquetage des premiers signaux optiques avec une étiquette sélectionnée parmi le groupe constitué de : vrais positifs et faux positifs.

**4.** Procédé selon l'une quelconque des revendications précédentes, dans lequel le processus de nouvelle découpe est effectué dans la même direction ou dans la direction opposée à celle du processus de découpe.

**5.** Procédé selon l'une quelconque des revendications précédentes, dans lequel le procédé d'analyse est mis en œuvre en tant que post-traitement et notamment après le processus de découpe et après le processus de nouvelle découpe et/ou est ou comprend un premier réseau neuronal (NN1) entraîné qui détermine si le résultat intermédiaire (z) est un résultat intermédiaire vrai positif ou faux positif.

**6.** Procédé selon la revendication immédiatement précédente, dans lequel des données d'entrée du premier réseau neuronal (NN1) comprennent les premiers signaux optiques et les seconds signaux optiques.

**7.** Procédé selon l'une quelconque des revendications 5 ou 6, dans lequel des données d'entraînement du premier réseau neuronal (NN1) comprennent les premiers signaux optiques sous forme étiquetée et les seconds signaux optiques, dans lequel une étiquette de détection des premiers signaux optiques sous forme étiquetée est une étiquette vraie positive ou une étiquette fausse positive pour au moins les premiers signaux optiques.

**8.** Procédé selon la revendication 7, dans lequel l'étiquette de détection est générée automatiquement, notamment sur la base d'une évaluation des seconds signaux optiques et/ou sur la base du résultat du procédé d'analyse.

**9.** Procédé selon l'une quelconque des revendications précédentes, dans lequel l'estimation de la probabilité d'une éventuelle perte de découpe par le mécanisme de surveillance de LOC est effectuée en ligne et notamment pendant le processus de découpe et/ou comprend ou est un second réseau neuronal (NN2) entraîné.

**10.** Procédé selon la revendication immédiatement précédente, dans lequel les données d'entrée du second réseau neuronal (NN2) comprennent les premiers signaux optiques.

**11.** Procédé selon l'une quelconque des revendications 9 ou 10, dans lequel les données d'entraînement du second réseau neuronal (NN2) comprennent les premiers signaux optiques sous forme étiquetée, dans lequel une étiquette d'analyse des premiers signaux optiques sous forme étiquetée est une probabilité de perte de découpe.

**12.** Procédé selon l'une quelconque des revendications précédentes, dans lequel le procédé de détection du mécanisme de surveillance de LOC (W) est en outre conçu pour calculer une position de réinitialisation sur la base de l'évaluation des premiers signaux optiques.

**13.** Dispositif (100) d'optimisation d'un mécanisme de surveillance de LOC (W) pour une machine de découpe au laser (L), le dispositif (100) étant conçu pour mettre en œuvre un procédé selon l'une quelconque des revendications précédentes du procédé, et comprenant :

- une interface (101) avec un agencement de capteur optique (S) pour la lecture des premiers et seconds signaux optiques acquis par l'agencement de capteur optique (S), dans lequel l'agencement de capteur optique (S) est disposé sur la tête de découpe au laser ;
- un mécanisme de surveillance de LOC (W) conçu pour mettre en œuvre un procédé de détection sur les premiers signaux optiques acquis et lus afin d'estimer si une perte de découpe, notamment sous forme de pièces incomplètement découpées, se produit ou s'est produite dans un processus de découpe et de fournir ceci comme résultat intermédiaire (z), **caractérisé en ce que** le mécanisme de surveillance de LOC (W) est conçu pour interrompre le processus de découpe et émettre une instruction de nouvelle coupe pour effectuer un processus de nouvelle découpe si le mécanisme de surveillance de LOC (W) a estimé la survenue d'une perte de découpe ;
- un processeur (P), le processeur (P) étant conçu pour effectuer les étapes suivantes si le mécanisme de surveillance de LOC (W) a estimé la survenue d'une perte de découpe :

  • la lecture des seconds signaux optiques via l'interface (101) pendant le processus de nouvelle découpe ;
  • • l'application d'un procédé d'analyse aux premiers et seconds signaux optiques afin de déterminer si le résultat intermédiaire (z) du mécanisme de surveillance de LOC (W) est un résultat intermédiaire vrai positif ou faux positif ;

■ • l'optimisation du procédé de détection du mécanisme de surveillance de LOC (W) en réponse à un résultat du procédé d'analyse, dans lequel le procédé d'analyse est conçu en tant que procédé d'apprentissage automatique et est conçu pour améliorer le procédé de détection du mécanisme de surveillance de LOC et le réentraîner.

14. Système de commande d'un processus de découpe au laser comprenant les composants suivants :

- un dispositif (100) selon la revendication 13,
- une machine de découpe au laser (L),
- un système de commande pour la machine de découpe au laser (L) et
- éventuellement, un serveur en nuage (SV), doté d'une mémoire (MEM) et d'interfaces de communication de données entre les composants respectifs.

15. Programme informatique, le programme informatique pouvant être chargé dans une unité de mémoire d'une unité informatique et contenant des segments de code de programme afin d'amener l'unité informatique à mettre en œuvre le procédé de commande d'un mécanisme de surveillance de LOC (W) selon l'une quelconque des revendications de procédé précédentes lorsque le programme informatique est exécuté dans l'unité informatique.

FIG. 1

FIG. 2

EP 4 681 031 B1

19

FIG. 3

FIG. 4

EP 4 681 031 B1

True positive intermediate result z

False positive intermediate result z

Process light during cutting

Image evaluation
by means of NN2*

Threshold value*

Beam breakage?

Stop

Position

Image evaluation
by means of NN2*

Threshold value*

Beam breakage?

Stop

Position

Workpiece

Cut through

Beam breakage

Not cut

Cut through

Not cut

Process light during re-cutting

Cutting process

Position

No...

Position

*) Watchdog: NN2 (optionally threshold value)

FIG. 5

FIG. 6

FIG. 7

FIG. 8

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102020209000 A1
- US 20190033824 A1

- EP 3412399 B1